# EUROPEAN PATENT SPECIFICATION

(11) **EP 2 706 739 B1**
(45) Date of publication and mention of the grant of the patent: **03.07.2019**
(21) Application number: 13181915.3
(22) Date of filing: 27.08.2013
(51) Int. Cl.: H04M 1/725, G06F 3/0484

(54) **Mobile terminal and control method thereof**
Mobiles Endgerät und Steuerungsverfahren dafür
Terminal mobile et son procédé de contrôle

(30) Priority: 10.09.2012 KR 20120099863
(43) Date of publication of application: 12.03.2014
(73) Proprietor: LG Electronics Inc., SEOUL (KR)
(72) Inventor: Kim, MeeJeong, Seoul 153-801 (KR)
(74) Representative: Cabinet Plasseraud

(56) References cited:
- EP-A2- 2 105 844
- US-A1- 2009 044 140
- US-A1- 2010 248 788

## Description

### BACKGROUND OF THE INVENTION

### Field of the Invention

The present invention relates to a mobile terminal and a control method thereof, and more particularly, to a mobile terminal and a control method thereof to copy at least one object included in a first screen and display the copied object on a second screen.

### Discussion of the Related Art

As functions of terminals such as personal computers, laptop computers, cellular phones diversify, the terminals become multimedia players having multiple functions for capturing pictures or moving images, playing music, moving image files and games and receiving broadcasting programs.

Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions. To support and enhance the increasing number of functions in a terminal, improving a structural part and/or a software part of the terminal would be desirable.

There is a need for a method of copying an object included in an execution screen of an application displayed on a display and displaying the copied object on an execution screen of another application such that the object can be easily accessed through the other application. US2009/044140 discloses a method for controlling data between two applications that are executed on a graphical user interface. EP2105844 discloses a terminal that is configured to permit a user to edit information displayed on a screen of the terminal on the basis of objects displayed in proximity to the displayed information. US2010/248788 discloses a method for supporting the division of a display screen when multiple applications are being executed simultaneously.

### SUMMARY OF THE INVENTION

Accordingly, the present invention is directed to a mobile terminal according to claim 1 and a control method according to claim 11 to automatically display a second application on a display when an object included in a first screen corresponding to a first application is copied that substantially obviates one or more problems due to limitations and disadvantages of the related art.

It is to be understood that both the foregoing general description and the following detailed description of the present invention are exemplary and explanatory and are intended to provide further explanation of the invention as claimed.

The mobile terminal and control method thereof according to the present invention have the following advantages.

According to the present invention, the second application can be automatically displayed on the display when an object included in the first screen corresponding to the first application is copied.

Furthermore, the copied object can be automatically displayed on a second screen corresponding to the second application.

In addition, the copied object can be displayed at a position desired by a user on the second screen.

Moreover, the user can easily access one of a plurality of currently executed second applications.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to an embodiment;
FIG. 2A is a front perspective view of the mobile terminal according to an embodiment;
FIG. 2B is a rear perspective view of the mobile terminal according to an embodiment;
FIGS. 2C and 2D illustrate forms of the mobile terminal and display screens according to various embodiments;
FIG. 3 is a view for explaining a proximity depth of a proximity sensor;
FIG. 4 illustrates a configuration of a CDMA wireless communication system communicating with the mobile terminal shown in FIG. 1;
FIG. 5 is a flowchart illustrating a method of controlling a mobile terminal according to a first embodiment of the present invention;
FIGS. 6 to 9 show exemplary display screens according to the first embodiment of the present invention;
FIGS. 10 and 11 show exemplary display screens according to a second embodiment of the present invention;
FIGS. 12, 13 and 14 show exemplary screens displaying a graphic object representing a second application;
FIG. 15 shows execution screens of a plurality of second applications; and
FIGS. 16 and 17 illustrate an example of selecting an object according to an embodiment of the present invention.

### DETAILED DESCRIPTION OF THE INVENTION

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

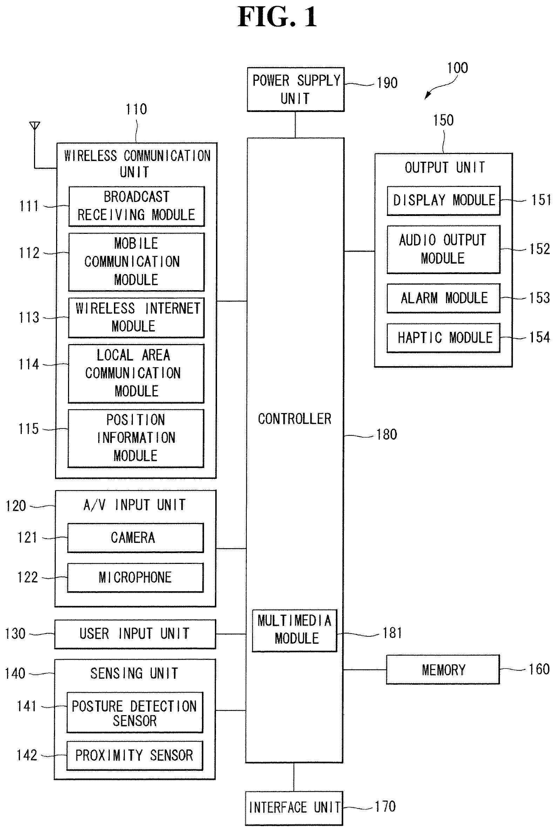

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 (of the sensing unit 140) may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

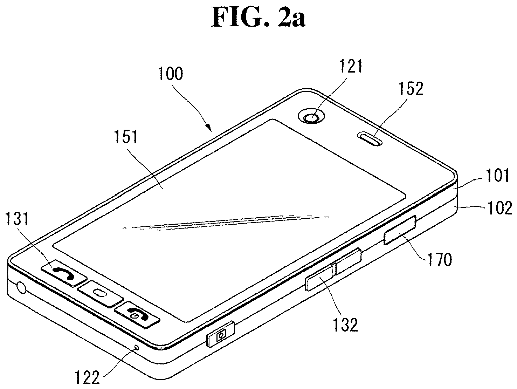

FIG. 2A is a front perspective view of a mobile terminal (or a handheld terminal) according to an embodiment.

The mobile terminal 100 may be a bar type terminal body. However, embodiments are not limited to a bar type terminal and may be applied to terminals of various types including slide type, folder type, swing type and/or swivel type terminals having at least two bodies that are relatively movably combined.

The terminal body may include a case (a casing, a housing, a cover, etc.) that forms an exterior of the mobile terminal 100. In this embodiment, the case may be divided into a front case 101 and a rear case 102. Various electronic components may be arranged in the space formed between the front case 101 and the rear case 102. At least one middle case may be additionally provided between the front case 101 and the rear case 102.

The cases may be formed of plastics through injection molding or made of a metal material such as stainless steel (STS) or titanium (Ti).

The display 151, the audio output unit 152, the camera 121, the user input unit 130/131 and 132, the microphone 122 and the interface 170 may be arranged (or provided) in the terminal body, and more specifically may be arranged (or provided) in the front case 101.

The display 151 may occupy most of the main face of the front case 101. The audio output unit 152 and the camera 121 may be arranged in a region in proximity to one of both ends of the display 151 and the user input unit 131, and the microphone 122 may be located in a region in proximity to another end of the display 151. The user input unit 132 and the interface 170 may be arranged (or provided) on sides of the front case 101 and the rear case 102.

The user input unit 130 may receive commands for controlling operation of the mobile terminal 100, and may include a plurality of operating units 131 and 132. The operating units 131 and 132 may be referred to as manipulating portions and may employ any tactile manner in which a user operates the operating units 131 and 132 while having tactile feeling.

The first and second operating units 131 and 132 may receive various inputs. For example, the first operating unit 131 may receive commands such as start, end and scroll and the second operating unit 132 may receive commands such as control of a volume of sound output from the audio output unit 152 or conversion of the display 151 to a touch recognition mode.

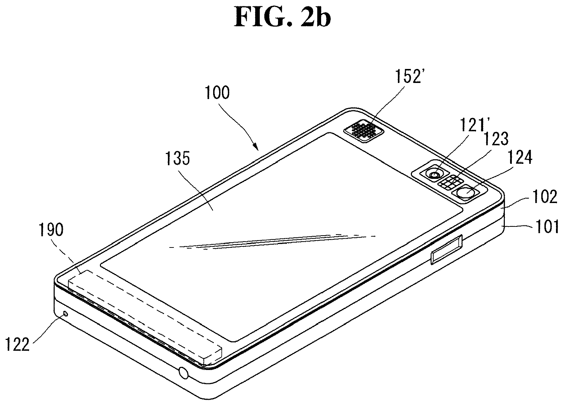

FIG. 2B is a rear perspective view of the mobile terminal (shown in FIG. 2A) according to an embodiment.

Referring to FIG. 2A, a camera 121' may be additionally attached to the rear side of the terminal body (i.e., the rear case 102). The camera 121' may have a photographing direction opposite to that of the camera 121 (shown in FIG. 2A) and may have pixels different from those of the camera 121 (shown in FIG. 2A).

For example, it may be desirable that the camera 121 has low pixels such that the camera 121 may capture an image of a face of a user and transmit the image to a receiving part in case of video telephony while the camera 121' has high pixels because the camera 121' captures an image of a general object and does not immediately transmit the image in many cases. The cameras 121 and 121' may be attached (or provided) to the terminal body such that the cameras 121 and 121' may rotate or pop-up.

A flash bulb 123 and a mirror 124 may be additionally provided in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 2A) and may be used for a speaker phone mode when the terminal is used for a telephone call.

A broadcasting signal receiving antenna may be additionally attached (or provided) to the side of the terminal body in addition to an antenna for telephone calls. The antenna constructing a part of the broadcasting receiving module 111 (shown in FIG. 1) may be set in the terminal body such that the antenna may be pulled out of the terminal body.

The power supply 190 for providing power to the mobile terminal 100 may be set in the terminal body. The power supply 190 may be included in the terminal body or may be detachably attached to the terminal body.

A touch pad 135 for sensing touch may be attached to the rear case 102. The touch pad 135 may be of a light transmission type, such as the display 151. In this example, if the display 151 outputs visual information through both sides thereof, the visual information may be recognized (or determined) by the touch pad 135. The information output through both sides of the display 151 may be controlled by the touch pad 135. Otherwise, a display may be additionally attached (or provided) to the touch pad 135 such that a touch screen may be arranged (or provided) even in the rear case 102.

The touch pad 135 may operate in connection with the display 151 of the front case 101. The touch pad 135 may be located in parallel with the display 151 behind the display 151. The touch panel 135 may be identical to or smaller than the display 151 in size.

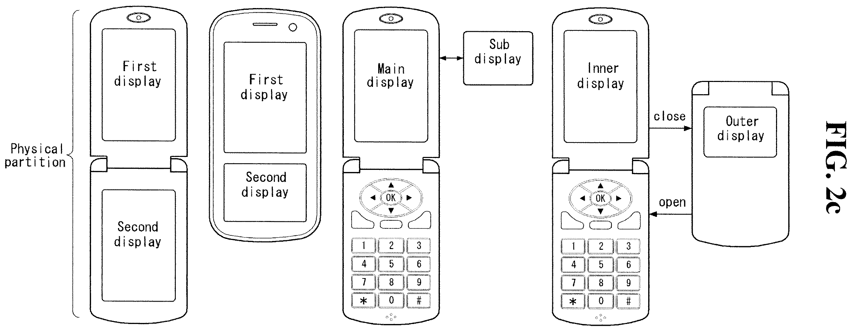

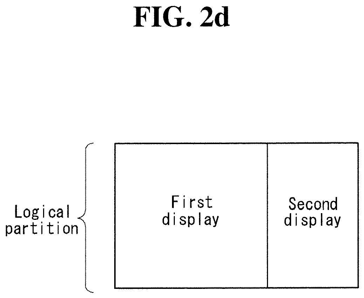

FIGS. 2C and 2D illustrate the mobile terminal 100 and the display 151 according to various embodiments.

Referring to FIG. 2C, the display 151 may include a first display and a second display that are physically separated from each other. In a folder type or slide type mobile terminal having two bodies connected through a hinge or a slide, the first display (or main display) may be formed on the inner face or outer face of one of the bodies, and the second display (or sub display) may be formed on the inner face or outer face of the other body. The sub display may be separated from the mobile terminal and may be detachably combined with the mobile terminal body through an interface to display data from the mobile terminal 100.

The display 151 may include first and second displays that may be logically separated from each other in a display panel, as shown in FIG. 2D.

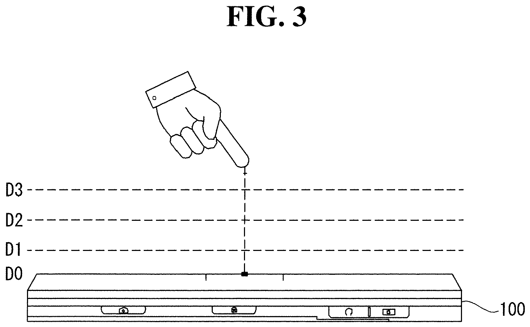

FIG. 3 is a view for explaining a proximity depth of a proximity sensor.

As shown in FIG. 3, when a pointer (such as a user's finger) approaches the touch screen, the proximity sensor located inside or near the touch screen may sense the approach of the pointer, and may output a proximity signal.

The proximity sensor may be constructed such that the proximity sensor outputs a proximity signal according to a distance between the pointer approaching the touch screen and the touch screen (referred to as "proximity depth").

The distance in which the proximity signal is output when the pointer approaches the touch screen may be referred to as a detection distance. The proximity depth may be determined by using a plurality of proximity sensors having different detection distances and by comparing proximity signals respectively output from the proximity sensors.

FIG. 3 shows a section of the touch screen in which proximity sensors capable of sensing three proximity depths may be provided. Proximity sensors capable of sensing less than three or more than four proximity depths may be provided in the touch screen.

More specifically, when the pointer completely contacts the touch screen (D0), it may be recognized as contact touch. When the pointer is located within a distance D1 from the touch screen, it may be recognized as a proximity touch of a first proximity depth. When the pointer is located in a range between the distance D1 and a distance D2 from the touch screen, it may be recognized as a proximity touch of a second proximity depth. When the pointer is located in a range between the distance D2 and a distance D3 from the touch screen, it may be recognized as a proximity touch of a third proximity depth. When the pointer is located greater than the distance D3 from the touch screen, it may be recognized as cancellation of the proximity touch.

Accordingly, the controller 180 may recognize the proximity touch as various input signals according to proximity distance and proximity position of the pointer with respect to the touch screen, and the controller 810 may perform various operation controls according to the input signals.

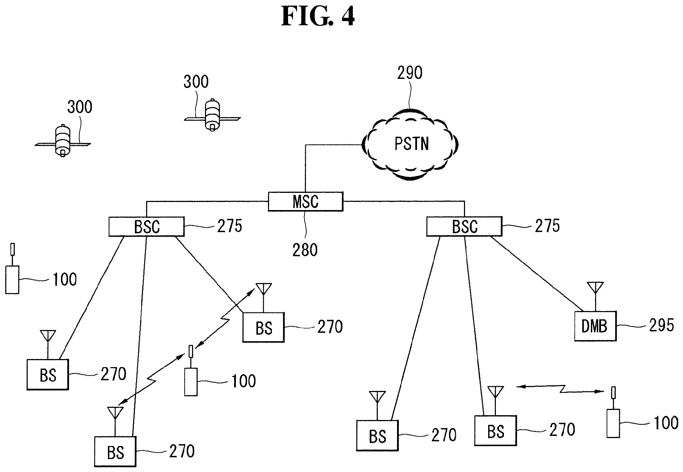

Referring to FIG. 4, a CDMA wireless communication system includes mobile terminals 100, base stations 270, base station controllers 275, and a mobile switching center 280. The mobile switching center 280 is connected to a public switch telephone network (PSTN) 290. The mobile switching center 280 is connected to the base station controllers 275. The base station controllers 275 are connected to the base stations 270 through backhaul lines. The backhaul lines may be constructed according to E1/T1, ATM, IP, PPP, frame relay, HDSL, ADSL or xDSL well-known in the art. The CDMA wireless communication system may include at least two base station controllers 275.

Each base station 270 may include a sector or sectors and each sector may include an omnidirectional antenna or an antenna adjusted to a specific radiation direction from the base station 270. Otherwise, each sector may include two diversity reception antennas. Each base station 270 is constructed to have frequency assignments, and the frequency assignments may have specific spectra (for example, 1.25MHz and 5MHz).

Intersection of sectors and frequency assignments may be referred to a CDMA channel.

The base stations 270 may be referred to as base station transceiver subsystems (BTSs). "Base station" may be used as a term that collectively designates the base station controller 275 and one or more base stations 270 in several examples. Furthermore, the base stations 270 may be referred to as "cell sites". Otherwise, individual sectors of a given base station 270 may be referred to as cell sites.

A terrestrial DMB transmitter 295 can transmit broadcasting signals to the mobile terminals 100 operating in the CDMA wireless communication system. The broadcasting receiving module 111 of each mobile terminal 100 is constructed to receive the broadcasting signals transmitted from the DMB transmitter 295. This can be similarly applied to different types of broadcast and multicast signaling as described above.

FIG. 4 illustrates global positioning system (GPS) satellites 300. These satellites 300 can track the positions of some or all of the mobile terminals 100. Although two satellites are shown in FIG. 4, position information can be obtained from less than or more than two satellites. In addition, other position-tracking techniques (for example, position-tracking techniques that can substitute for GPS technique or can be added to the GPS technique) can be used. If required, some or all of the GPS satellites 300 can support satellite DMB transmission separately or additionally.

When the CDMA wireless communication system operates, the base stations 270 receive reverse link signals from the mobile terminals 100. The mobile terminals 100 may be in a state that the mobile terminals 100 are making calls, sending messages or performing other communications. The reverse link signals received by the base stations 270 are processed by the base stations 270. The processed data is transmitted to the base station controllers 275 connected to the base stations 270. The base station controllers 275 provide call resource allocation and mobility management functionality including soft handoffs between the base stations 270. Furthermore, the base station controllers 275 transmit the received data to the mobile switching center 280. The mobile switching center 280 provides additional routing services for interfacing with the PSTN 290. Similarly, the PSTN 290 interfaces with the mobile switching center 280, and the mobile switching center 280 interfaces with the base station controllers 275. The base station controllers 275 control the base stations 270 to transmit forward link signals to the mobile terminals 100.

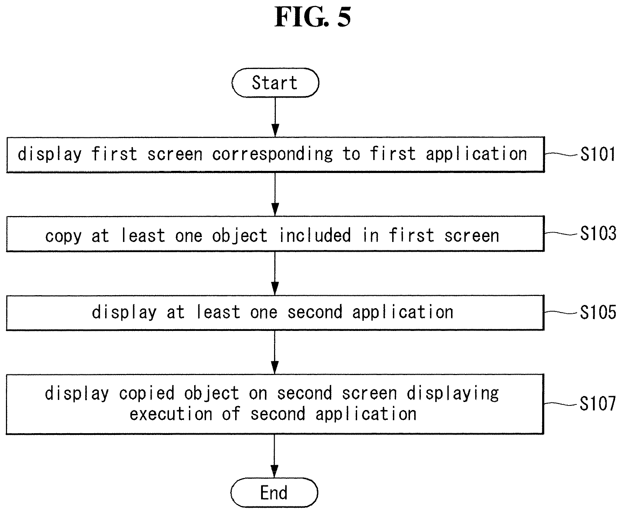

FIG. 5 is a flowchart illustrating a method of controlling a mobile terminal according to a first embodiment of the present invention.

The mobile terminal 100 according to an embodiment of the present invention can copy an object included in a first screen of the display 151 and display the copied object on a second screen.

Specifically, the controller 180 of the mobile terminal 100 according to an embodiment of the present invention can display the first screen corresponding to a first application on the display 151 (S101).

The controller 180 can copy at least one object included in the first screen (S103). The object may include a character, a picture, etc.

When the controller 180 copies at least one object, the controller 180 can automatically display at least one second application on the display 151 (S105). That is, the controller 180 can display the second application on the display 151 when the object is copied.

The controller 180 can display an execution screen of the second application and at least one of graphic objects representing the second application on the display 151. The graphic objects may include at least one of an icon corresponding to the second application and a thumbnail image of the execution screen.

When a plurality of second applications is present, the controller 180 can arrange a list of execution screens of the second applications in a horizontal or vertical scroll form.

The controller 180 can display at least one of the currently executed application, an application capable of displaying a copied object and a frequently accessed application on the display 151. The controller 180 can display the currently executed application on the display 151 preferentially.

The controller 180 according to another embodiment of the present invention senses a motion of the mobile terminal 100 and displays the second screen on the display 151 when the sensed motion meets predetermined standards.

The controller 180 can display the copied object on the second screen displaying execution of the second application (107).

The controller 180 can automatically display the copied object on the second screen displaying execution of the second application. That is, the object can be automatically displayed on the second screen upon display of the second screen on the display 151.

Furthermore, the controller 180 can manually display the copied object on the second screen. That is, the controller 180 can display a list of copied objects on the display 151. Upon acquisition of a signal for selecting at least one of the objects included in the list, the controller 180 can display the at least one object on the second screen displaying execution of the second application.

When the display 151 is a touchscreen and the selection signal corresponds to touch, the controller 180 can maintain or delete the object selected by the selection signal from the object list based on a touched point of the object included in the object list.

For example, the controller 180 can copy and paste the object upon acquisition of a touch signal applied to a left point of the object. The controller 180 can cut and paste the object upon acquisition of a touch signal applied to a right point of the object.

The controller 180 can change a position at which the copied object will be located in the second screen according to a predetermined input signal. For example, the controller 180 can change the position of the object upon acquisition of a drag-and-drop signal for the object.

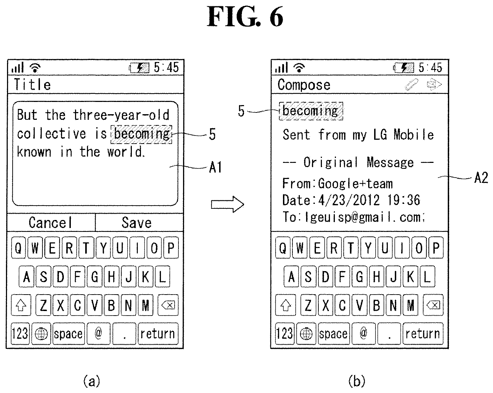

FIGS. 6 to 9 show exemplary display screens according to the first embodiment of the present invention.

FIG. 6 illustrates an example of copying an object included in the first screen and displaying the copied object on the second screen displayed on the display 151 according to an embodiment of the present invention.

Referring to FIG. 6(a), the controller 180 can copy at least one object included in the first screen A1 corresponding to the first application. For example, the controller 180 can copy "becoming" 5.

Referring to FIG. 6(b), the controller 180 can display the object 5 on the second screen. The second screen displays execution of the second application. For example, when the second application is an e-mail application, the second screen can be a screen A2 in a held state during composition of e-mail. That is, the controller 180 can affix the object 5 to the mail creation screen A2.

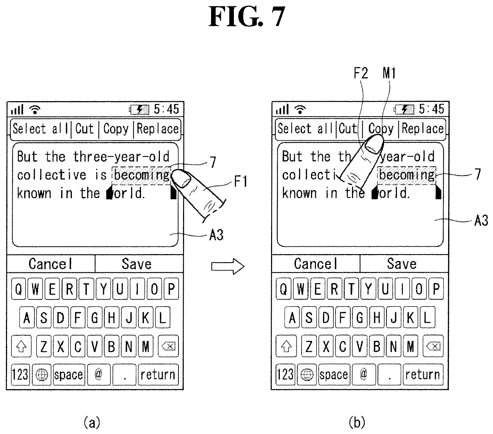

FIG. 7 illustrates an example of copying an object according to an embodiment of the present invention. As shown in FIG. 7(a), the controller 180 can display the first screen A3 corresponding to the first application on the display 151. The controller 180 can select at least one object 7 included in the first screen A3 upon acquisition of a signal such as a touch by a finger F1. The controller 180 can display the selected object 7 as a shaded or dotted line.

As shown in FIG. 7(b), the controller 180 can display a menu bar for controlling the selected object 7 upon selection of the object 7 included in the first screen. The menu bar may include a copy button M1, a deletion button, a selection button, etc.

The controller 180 can copy the selected object 7 upon acquisition of a signal such as a touch by a finger F2 applied to the copy button M1. The controller 180 can store the copied object 7.

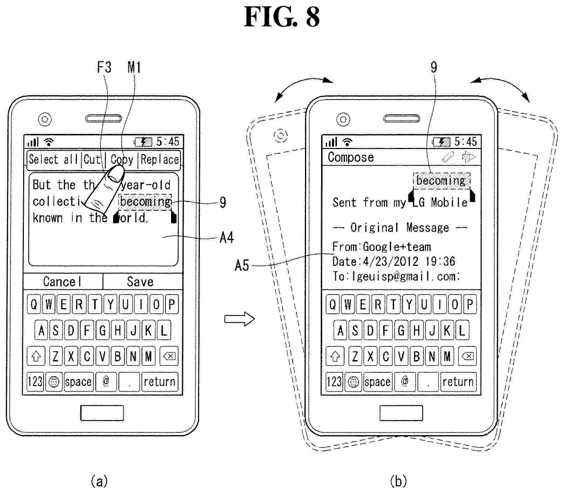

FIG. 8 illustrates an example of changing a screen displayed on the display 151 according to motion of the mobile terminal 100.

As shown in FIG. 8(a), the controller 180 can copy at least one object 9 included in the first screen A4. That is, the controller 180 can copy characters "becoming" 9 upon acquisition of a signal such as a touch by a finger F3 applied to the copy button M1.

As shown in FIG. 8(b), the controller 180 can sense motion of the mobile terminal 100 and change the application execution screen displayed on the display 151 when the sensed motion meets predetermined conditions.

That is, the controller 180 can display the second screen A5 corresponding to the second application on the display 151. The controller 180 can display the copied object 9 on the second screen A5.

The controller 180 can directly copy the object 9 and paste the copied object 9 to the second screen A5 by changing the application execution screen from the first screen A4 to the second screen A5 while the object 9 to be copied-and-pasted is displayed on the display 151.

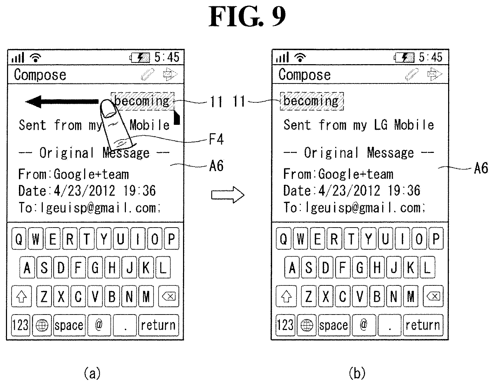

FIG. 9 illustrates an example of changing a position on the second screen A6 at which an object 11 will be displayed.

As shown in FIG. 9(a), the controller 180 can change the position in the second screen A6 at which the copied object 11 will be displayed according to a predetermined input signal. The controller 180 can move the object 11 upon acquisition of a signal such as drag-and-drop by a finger f4 performed on the object 11.

As shown in FIG. 9(b), the controller 180 can display the object 11 on a predetermined region of the second screen A6, that is, the changed position. This means that the controller 180 can copy an object included in the first screen and paste the copied object to an arbitrary position of the second screen.

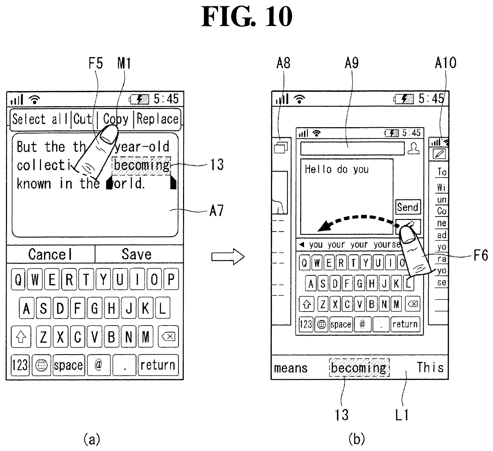

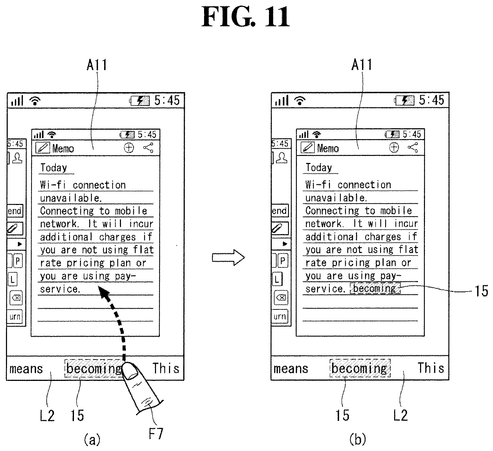

FIGS. 10 and 11 show exemplary display screens according to a second embodiment of the present invention.

As shown in FIG. 10(a), the controller 180 can display the first screen A7 corresponding to the first application on the display 151 and copy at least one object 13 included in the first screen A7.

As shown in FIG. 10(b), the controller 180 can automatically display at least one second application on the display 151 when the object 13 is copied. That is, the second application can be automatically displayed when the controller 180 copies at least one object.

The controller 180 can display the execution screen A9 of the second application on the display 151. In case of a plurality of second applications, the controller 180 can arrange execution screens A8, A9 and A10 of the second applications in a list in a scroll form. The controller 180 can sequentially display the plurality of execution screens upon acquisition of a signal such as flicking by a finger 6 applied to the execution screens A8, A9 and A10.

The controller 180 can display at least one of the currently executed application, an application capable of displaying the copied object and a frequently accessed application on the display 151. The controller 180 can display the currently executed application on the display 151 preferentially.

The controller 180 can display a list L1 including the copied object 13 on the display 151. As shown in FIG. 10(b), the controller 180 can acquire a signal for selecting an object included in the list L1 by displaying the list L1 at the bottom of the display 151.

FIG. 11 shows an example of displaying at least one object 15 included in an object list L2 on the second screen A11.

Referring to FIG. 11(a), the controller 180 can acquire a selection signal such as drag-and-drop by a finger F7 performed on the copied object 15.

Referring to FIG. 11(b), the controller 180 can display the object 15 in a predetermined region of the second screen A11 upon acquisition of a selection signal such as drag-and-drop from the object list L2 to the predetermined region of the second screen A11. This means that the object 15 can be pasted to the region of the second screen A11.

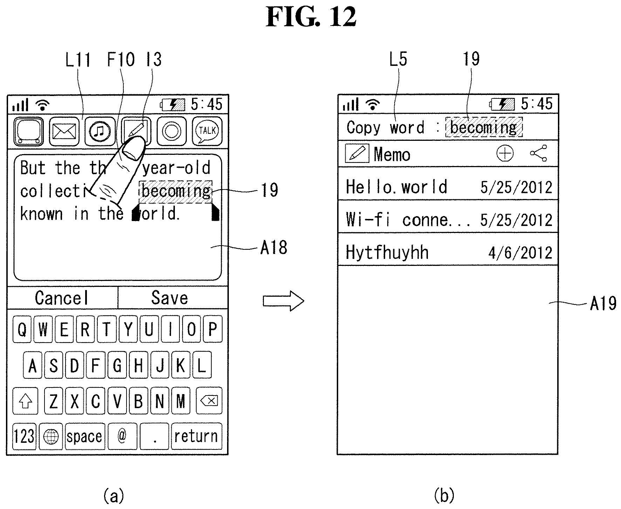

FIGS. 12, 13 and 14 illustrate an example of displaying a graphic object representing the second application.

The controller 180 can display at least one of the execution screen of the second application and the graphic object representing the second application on the display 151. The graphic object can include at least one of an icon corresponding to the second application and a thumbnail image of the execution screen.

Referring to FIG. 12(a), the controller 180 can display the first screen A18 corresponding to the first application on the display 151 and copy at least one object 19 included in the first screen A18. When the controller 180 copies the object 19, the icon 13 corresponding to the second application can be displayed on the display 151. The controller 180 can display a list L11 including the icon 13 corresponding to the second application. The controller 180 can acquire a signal such as a touch by a first F10 applied to the icon I3.

Referring to FIG. 12(b), the controller 180 can execute the second application corresponding to the icon 13 on the display 151 upon acquisition of a signal for selecting the icon 13. The controller 180 can display a list L5 including the object 19 copied and pasted to a predetermined region of the display 151.

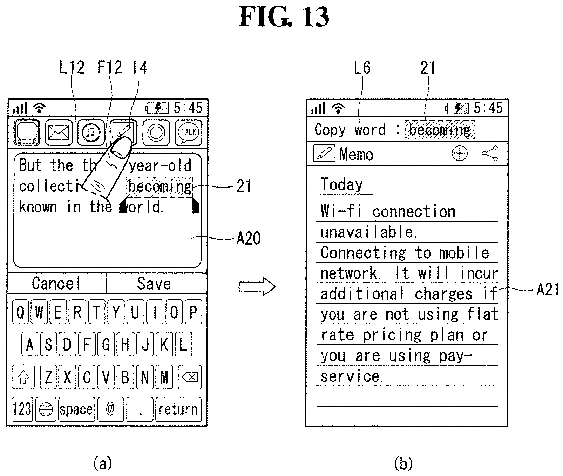

Referring to FIG. 13(a), the controller 180 can display a list L12 including the icon I4 corresponding to the second application on the display 151 when at least one object 21 included in the first screen A20 is copied. The controller 180 can acquire a selection signal such as a touch by a finger F12 applied to the icon I4.

Referring to FIG. 13(b), the controller 180 can display the second application corresponding to the icon I4 on the display 151. That is, the controller 180 can display at least one of the currently executed application, an application capable of displaying the copied object and a frequently accessed application on the display 151.

For example, when the second application is a memo application and a specific memo is activated, the controller 180 can display the currently executed screen A21 on the display 151.

The controller 180 can display a list L6 including the copied object 21 on a predetermined region of the display 151. The controller 180 can display the object 21 on the second screen A21 upon acquisition of a signal for selecting the object 21 included in the list L6. That is, the object 21 is pasted to the second screen A21.

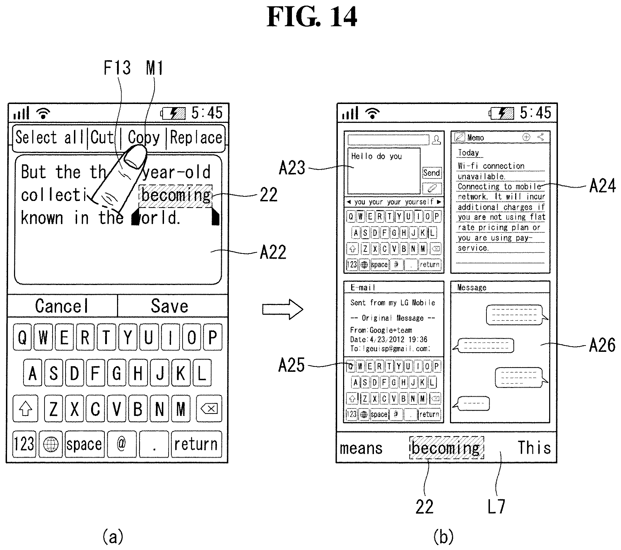

FIG. 14 illustrates an example of displaying thumbnail images of the execution screen of the second application as graphic objects representing the second application on the display 151 when the object 22 is copied.

Referring to FIG. 14(a), the controller 180 can copy at least one object 22 included in the first screen A22. That is, the controller 180 can copy the selected object 22 upon acquisition of a selection signal such as a touch by a finger F13 applied to the copy button M1.

Referring to FIG. 14(b), the controller 180 can display thumbnail images A23, A24, A25 and A26 of the execution screen of the second application on the display 151 when the object 22 is copied.

The controller 180 can display a list L7 including the copied object 22 on a predetermined region of the display 151.

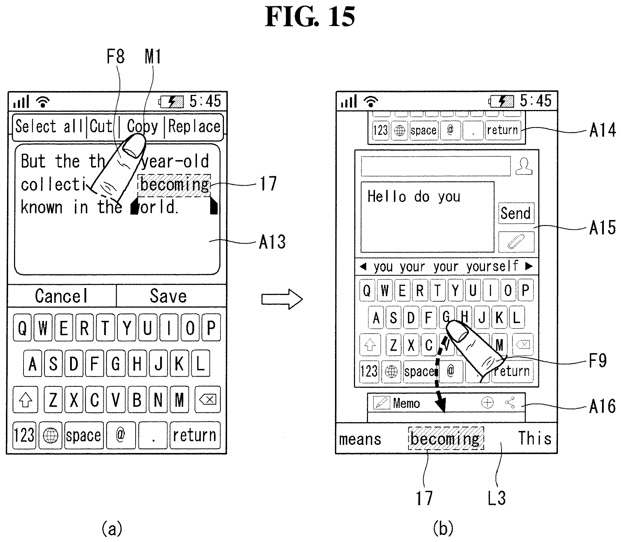

FIG. 15 shows the second application execution screen.

Referring to FIG. 15(a), the controller 180 can copy at least one object 17 included in the first screen A13 upon acquisition of a selection signal such as a touch by a finger F8 applied to the copy button M1.

Referring to FIG. 15(b), the controller 180 can display the second application execution screen on the display 151 when the object 17 is copied. In case of a plurality of second applications, the controller 180 can display a list of execution screens A14, A15 and A16 of the plurality of second applications in a vertical scroll form. The controller 180 can vertically move the execution screens A14, A15 and A16 upon acquisition of a selection signal such as drag by a finger F9.

The controller 180 can display a list L3 including the copied object 17 on a predetermined region of the display 151.

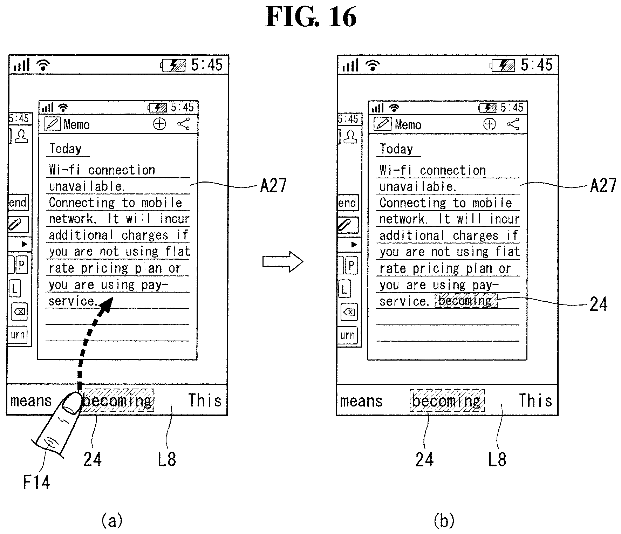

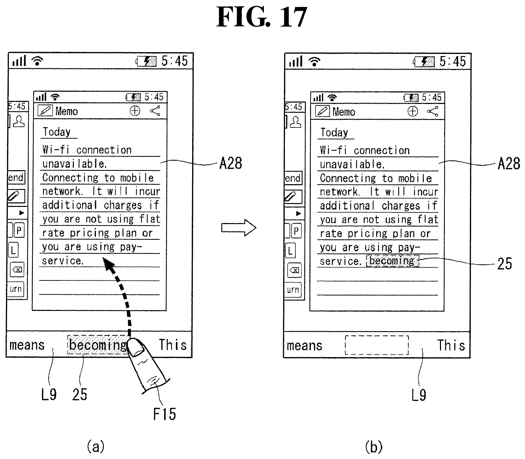

FIGS. 16 and 17 illustrate an example of selecting an object according to an embodiment of the invention.

If the display 151 is a touchscreen and a selection signal corresponds to touch, the controller 180 can maintain or delete an object 24, selected from an object list L8 according to the selection signal, based on a touched point of the object 24.

Referring to FIG. 16(a), the controller 180 acquires a signal for selecting the at least one object 24 included in the object list L8. The controller 180 can acquire a signal corresponding to touch of a left point of the object 24 by a finger F14. The controller 180 can receive a signal such as drag-and-drop of the left point of the object 24 to a predetermined region of the second screen A27.

Referring to FIG. 16(b), the controller 180 can display the object 24 on the predetermined region of the second screen A27. That is, the object 24 can be pasted to the predetermined region of the second screen.

The controller 180 can maintain the object 24 in the object list L8 even after the object 24 is displayed on the predetermined region of the second screen. That is, the controller 180 can maintain the object 24 in the object list L8 upon acquisition of the selection signal applied to the left point of the object 24.

Referring to FIG. 17(a), the controller 180 can acquire a signal for selecting at least one object 25 included in an object list L9. The controller 180 can acquire a signal corresponding to touch of a right point of the object 25 by a finger F15. The controller 180 can receive a signal such as drag-and-drop of the right point of the object 25 to a predetermined region of the second screen A28.

Referring to FIG. 17(b), the controller 180 can display the object 25 on the predetermined region of the second screen A28. That is, the object 25 can be pasted to the predetermined region of the second screen.

The controller 180 can delete the object 24 from the object list L9 after the object 25 is displayed on the predetermined region of the second screen. That is, the controller 180 can delete the object 25 from the object list L9 upon acquisition of the selection signal applied to the right point of the object 25.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier wave through a transmission medium or communication network.

The computer readable recording medium may be any data storage device that can store data that can thereafter be read by a computer system. Examples of the computer readable recording medium may include read-only memory (ROM), random-access memory (RAM), CD-ROMs, DVD±ROM, DVD-RAM, magnetic tapes, floppy disks, and optical data storage devices. The computer readable recording medium may also be distributed over a network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. Such phrases appear in various places in the specification but do not necessarily refer to the same embodiment. Further, when a particular feature, structure, or characteristic is described in connection with any embodiment, it is submitted that it is within the purview of one skilled in the art to effect such feature, structure, or characteristic in connection with other embodiments.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100), comprising:
a touch screen (151); and
a controller (180) configured to:
execute a first application;
cause the touch screen (151) to display a first screen corresponding to the executed first application, the first screen being displayed on at least a partial area of the touch screen;
and
in response to an input for copying at least one object included in the first screen, automatically execute a second application and cause the touch screen (151) to display a second screen corresponding to the executed second application, the second screen being displayed on the at least partial area;
wherein the controller (180) is configured to automatically display the copied object on the second screen of the second application.

2. The mobile terminal (100) of claim 1, wherein the controller (180) changes a position on the second screen at which the copied object will be displayed, based on a predetermined input signal.

3. The mobile terminal (100) of claim 1, wherein the controller (180) displays a list of copied objects on the touch screen (151), and displays at least one object included in the list on the second screen displaying execution of the second application upon acquisition of a signal for selecting the at least one object included in the list.

4. The mobile terminal (100) of claim 3, wherein, when the selection signal is a touch, the controller (180) maintains or deletes an object selected from the list according to the selection signal based on a touched point of the object included in the list.

5. The mobile terminal (100) of claim 3, wherein the controller (180) changes a position on the second screen at which the copied object will be displayed, based on a predetermined input signal.

6. The mobile terminal (100) of claim 1, wherein the controller displays at least one of an execution screen of the second application and a graphic object representing the second application on the touch screen (151), and the graphic object includes at least one of an icon corresponding to the second application and a thumbnail image of the execution screen.

7. The mobile terminal (100) of claim 6, wherein, when a plurality of second applications are present, the controller (180) displays a list of execution screens of the second applications in a horizontal or vertical scroll form.

8. The mobile terminal (100) of claim 1, wherein the controller (180) displays at least one of a currently executed application, an application capable of displaying the copied object and a frequently accessed application on the touch screen (151).

9. The mobile terminal (100) of claim 8, wherein the controller (180) displays the currently executed application on the touch screen (151) preferentially.

10. The mobile terminal (100) of claim 1, wherein the controller (180) senses motion of the mobile terminal (100) and displays the second screen on the touch screen display (151) when the sensed motion meets predetermined standards.

11. A method of controlling a mobile terminal (100), comprising:
executing a first application;
displaying a first screen corresponding to the executed first application on a touch screen (151), the first screen being displayed on at least a partial area of the touch screen (151);
receiving an input for copying at least one object included in the first screen;
in response to the input, automatically executing a second application and displaying a second screen corresponding to the executed second application on the touch screen (151), the second screen being displayed on the at least partial area; and
automatically displaying the copied object on the second screen displaying execution of the second application.

## Patentansprüche

1. Mobiles Endgerät (100), das aufweist:
einen Berührungsbildschirm (151); und
einen Controller (180), der konfiguriert ist:
eine erste Anwendung auszuführen;
zu bewirken, dass der Berührungsbildschirm (151) einen ersten Bildschirm anzeigt, der der ausgeführten ersten Anwendung entspricht, wobei der erste Bildschirm auf mindestens einen Teilbereich des Berührungsbildschirms angezeigt wird; und
als Reaktion auf eine Eingabe zum Kopieren von mindestens einem Objekt, das im ersten Bildschirm enthalten ist, automatisch eine zweite Anwendung auszuführen und zu bewirken, dass der Berührungsbildschirm (151) einen zweiten Bildschirm anzeigt, der der ausgeführten zweiten Anwendung entspricht, wobei der zweite Bildschirm auf dem mindestens einen Teilbereich angezeigt wird;
wobei der Controller (180) konfiguriert ist, automatisch das kopierte Objekt auf dem zweiten Bildschirm der zweiten Anwendung anzuzeigen.

2. Mobiles Endgerät (100) nach Anspruch 1, wobei der Controller (180) eine Position auf dem zweiten Bildschirm, an der das kopierte Objekt angezeigt wird, beruhend auf einem vorgegebenen Eingangssignal ändert.

3. Mobiles Endgerät (100) nach Anspruch 1, wobei der Controller (180) eine Liste von kopierten Objekten auf dem Berührungsbildschirm (151) anzeigt und mindestens ein in der Liste enthaltenes Objekt auf dem zweiten Bildschirm, der die Ausführung der zweiten Anwendung anzeigt, bei der Erfassung eines Signals zum Auswählen des mindestens einen in der Liste enthaltenen Objekts anzeigt.

4. Mobiles Endgerät (100) nach Anspruch 3, wobei, wenn das Auswahlsignal eine Berührung ist, der Controller (180) ein gemäß dem Auswahlsignal aus der Liste ausgewähltes Objekt beruhend auf einem Berührungspunkt des in der Liste enthaltenen Objekts beibehält oder löscht.

5. Mobiles Endgerät (100) nach Anspruch 3, wobei der Controller (180) eine Position auf dem zweiten Bildschirm, an der das kopierte Objekt angezeigt wird, beruhend auf einem vorgegebenen Eingangssignal ändert.

6. Mobiles Endgerät (100) nach Anspruch 1, wobei der Controller einen Ausführungsbildschirm der zweiten Anwendung und/oder ein Graphikobjekt, das die zweite Anwendung repräsentiert, auf dem Berührungsbildschirm (151) anzeigt, und das Graphikobjekt ein Piktogramm, das der zweiten Anwendung entspricht, und/oder ein Miniaturbild des Ausführungsbildschirms aufweist.

7. Mobiles Endgerät (100) nach Anspruch 6, wobei, wenn mehrere zweite Anwendungen vorhanden sind, der Controller (180) eine Liste der Ausführungsbildschirme der zweiten Anwendungen in einen horizontalen oder vertikalen Bildlaufform anzeigt.

8. Mobiles Endgerät (100) nach Anspruch 1, wobei der Controller (180) eine gegenwärtig ausgeführte Anwendung und/oder eine Anwendung, die zum Anzeigen des kopierten Objekts imstande ist, und/oder eine Anwendung auf dem Berührungsbildschirm (151) anzeigt, auf die häufig zugegriffen wird.

9. Mobiles Endgerät (100) nach Anspruch 8, wobei der Controller (180) vorzugsweise die gegenwärtig ausgeführte Anwendung auf dem Berührungsbildschirm (151) anzeigt.

10. Mobiles Endgerät (100) nach Anspruch 1, wobei der Controller (180) eine Bewegung des mobilen Endgeräts (100) abtastet und den zweiten Bildschirm auf der Berührungsbildschirmanzeige (151) anzeigt, wenn die abgetastete Bewegung vorgegebene Normen erfüllt.

11. Verfahren zum Steuern eines mobilen Endgeräts (100), das aufweist:
Ausführen einer ersten Anwendung;
Anzeigen eines ersten Bildschirms, der der ausgeführten ersten Anwendung entspricht, auf einem Berührungsbildschirm (151), wobei der erste Bildschirm auf mindestens einen Teilbereich des Berührungsbildschirms (151) angezeigt wird;
Empfangen einer Eingabe zum Kopieren von mindestens einem Objekt, das im ersten Bildschirm enthalten ist;
als Reaktion auf die Eingabe, automatisches Ausführen einer zweiten Anwendung und Anzeigen eines zweiten Bildschirms, der der ausgeführten zweiten Anwendung entspricht, auf dem Berührungsbildschirm (151), wobei der zweite Bildschirm auf dem mindestens einen Teilbereich angezeigt wird; und
automatisches Anzeigen des kopierten Objekts auf dem zweiten Bildschirm, der die Ausführung der zweiten Anwendung anzeigt.

## Revendications

1. Terminal mobile (100), comprenant :
un écran tactile (151) ; et
un dispositif de commande (180) configuré pour :
exécuter une première application ;
faire en sorte que l'écran tactile (151) affiche un premier écran correspondant à la première application exécutée, le premier écran étant affiché sur au moins une zone partielle de l'écran tactile ; et
en réponse à une entrée pour copier au moins un objet inclus dans le premier écran, automatiquement exécuter une seconde application et faire en sorte que l'écran tactile (151) affiche un second écran correspondant à la seconde application exécutée, le second écran étant affiché sur la zone au moins partielle ;
dans lequel le dispositif de commande (180) est configuré pour automatiquement afficher l'objet copié sur le second écran de la seconde application.

2. Terminal mobile (100) selon la revendication 1, dans lequel le dispositif de commande (180) change une position sur le second écran à laquelle l'objet copié sera affiché, sur la base d'un signal d'entrée prédéterminé.

3. Terminal mobile (100) selon la revendication 1, dans lequel le dispositif de commande (180) affiche une liste d'objets copiés sur l'écran tactile (151), et affiche au moins un objet inclus dans la liste sur le second écran affichant l'exécution de la seconde application lors de l'acquisition d'un signal pour sélectionner l'au moins un objet inclus dans la liste.

4. Terminal mobile (100) selon la revendication 3, dans lequel, lorsque le signal de sélection est un toucher, le dispositif de commande (180) maintient ou supprime un objet sélectionné à partir de la liste selon le signal de sélection sur la base d'un point touché de l'objet inclus dans la liste.

5. Terminal mobile (100) selon la revendication 3, dans lequel le dispositif de commande (180) change une position sur le second écran à laquelle l'objet copié sera affiché, sur la base d'un signal d'entrée prédéterminé.

6. Terminal mobile (100) selon la revendication 1, dans lequel le dispositif de commande affiche au moins un d'un écran d'exécution de la seconde application et d'un objet graphique représentant la seconde application sur l'écran tactile (151), et l'objet graphique inclut au moins une d'une icône correspondant à la seconde application et d'une image vignette de l'écran d'exécution.

7. Terminal mobile (100) selon la revendication 6, dans lequel, lorsqu'une pluralité de secondes applications sont présentes, le dispositif de commande (180) affiche une liste d'écrans d'exécution des secondes applications sous forme de défilement horizontal ou vertical.

8. Terminal mobile (100) selon la revendication 1, dans lequel le dispositif de commande (180) affiche au moins une d'une application actuellement exécutée, d'une application capable d'afficher l'objet copié et d'une application à laquelle l'accès est fréquemment réalisé, sur l'écran tactile (151).

9. Terminal mobile (100) selon la revendication 8, dans lequel le dispositif de commande (180) affiche l'application actuellement exécutée sur l'écran tactile (151) de façon préférentielle.

10. Terminal mobile (100) selon la revendication 1, dans lequel le dispositif de commande (180) détecte le mouvement du terminal mobile (100) et affiche le second écran sur l'affichage d'écran tactile (151) lorsque le mouvement détecté satisfait à des standards prédéterminés.

11. Procédé de commande d'un terminal mobile (100), comprenant :
l'exécution d'une première application ;
l'affichage d'un premier écran correspondant à la première application exécutée sur un écran tactile (151), le premier écran étant affiché sur au moins une zone partielle de l'écran tactile (151) ;
la réception d'une entrée pour copier au moins un objet inclus dans le premier écran ;
en réponse à l'entrée, l'exécution automatique d'une seconde application et l'affichage automatique d'un second écran correspondant à la seconde application exécutée sur l'écran tactile (151), le second écran étant affiché sur la zone au moins partielle ; et
l'affichage automatique de l'objet copié sur le second écran affichant l'exécution de la seconde application.
